# EUROPÄISCHE PATENTANMELDUNG

(11) **EP 2 148 153 A2**
(43) Veröffentlichungstag der Anmeldung: **27.01.2010**
(21) Anmeldenummer: 09007375.0
(22) Anmeldetag: 04.06.2009
(51) Int. Cl.: F24J 2/34

(54) **Sonnenkollektor**

(30) Priorität: 26.07.2008 DE 102008035040
(71) Anmelder: Robert Bosch GmbH, 70442 Stuttgart (DE)
(72) Erfinder: Kröll, Ulrich, 72654 Neckartenzlingen (DE)

(57) **Zusammenfassung**

Die Erfindung betrifft einen Sonnenkollektor, insbesondere mit einem integrierten Warmwasserspeicher, mit mindestens einem Speicherbehälter (1) mit einem Anschluss zur Kaltwassereinleitung (7) und einem Anschluss zur Warmwasserableitung (8) sowie einer Wärmeisolierung.

Der Erfindung liegt die Aufgabe zugrunde, einen einfach aufgebauten, gut handhabbaren Sonnenkollektor, insbesondere mit einem integrierten Warmwasserspeicher, zu schaffen.

Gekennzeichnet ist der Warmwasserspeicher dadurch, dass der Wasser führende Bereich des Sonnenkollektors und/oder der Speicherbehälter (1) mindestens in Teilbereichen mit einer flüssigkeitsdichten, sackartigen Folie (2) ausgebildet sind, welche in einen von transparenter Abdeckung (3), Absorber (4), Rahmen (5) und/oder Formteilen (6) der Wärmeisolierung begrenzten Raum eingebracht ist.

## Beschreibung

Die Erfindung betrifft einen Sonnenkollektor, insbesondere mit einem integrierten Warmwasserspeicher, nach dem Oberbegriff des Patentanspruches 1.

Gattungsgemäße Sonnenkollektoren, sogenannte Speicherkollektoren sind in frostfreien Regionen weit verbreitet, denn dort können heiztechnische Geräte und Anlagen problemlos im Außenbereich aufgestellt werden. Wegen des einfachen und kompakten Aufbaus durch die direkte Verbindung zwischen dem Absorberbereiches für solare Strahlung und dem Speichervolumen gelten sie als besonders preisgünstig und wirtschaftlich. Es gibt Ausführungen mit Flachkollektoren und Vakuum-Röhrenkollektoren.

Der Speicherbehälter besitzt in der Regel einen Anschluss zur Kaltwassereinleitung und einen Anschluss zur Warmwasserableitung und ist von einer Wärmeisolierung, beispielsweise aus bekannte Dämmstoffen wie Schaummaterialen oder Mineralwolle umgeben. Sie bildet wahlweise direkt den äußeren Mantel oder ist von einem dünnwandigen Mantelteil, zum Beispiel einem Blech, umgeben. Üblicherweise ist der Speicherbehälter selbst aus Stahlblech hergestellt. Diese üblichen Konstruktionen sind hinreichend bekannt. Dadurch entsteht ein relativ hohes Konstruktionsgewicht, insbesondere bei Einheiten mit größeren Wasserinhalten. Somit ist die Montage der Anlagen teilweise mit einigem Aufwand verbunden, um die Teile zu transportieren, zu lagern, zu handhaben und am Aufstellort zu fixieren.

Bisher werden generell die Speicherbehälter für die Innenaufstellung üblicherweise als Druckbehälter ausgebildet, weil einerseits bei Warmwasserspeichern der Wassernetzdruck und andererseits bei Pufferspeichern der Systemdruck aus dem Heiznetz ansteht. Speziell für die Speicherkollektoren sind auch schon drucklose Varianten bekannt.

Der Erfindung liegt die Aufgabe zugrunde, einen einfach aufgebauten, gut handhabbaren Sonnenkollektor, insbesondere mit einem integrierten Warmwasserspeicher, zu schaffen. Erfindungsgemäß wird dies mit den Merkmalen des Patentanspruches 1 gelöst. Vorteilhafte Weiterbildungen sind den Unteransprüchen zu entnehmen.

Der Sonnenkollektor ist **dadurch gekennzeichnet, dass** der Wasser führende Bereich des Sonnenkollektors und/oder der Speicherbehälter mindestens in Teilbereichen mit einer flüssigkeitsdichten, sackartigen Folie ausgebildet sind, welche in einem von transparenter Abdeckung, Absorber, Rahmen und/oder Formteilen der Wärmeisolierung begrenzten Raum eingebracht ist. Dabei bildet die flüssigkeitsdichte, sackartige Folie einen geschlossenen Raum und wird mit einer stagnierenden Flüssigkeit, insbesondere mit Wasser, Wasser mit Korrosionsschutz und Einfrierschutz, oder mit einem Medium mit einer großen Wärmekapazität befüllt.

Einzelne Formteile zur Aufnahme der Folie bestehen vorwiegend aus Wärmedämmmaterial, insbesondere Schaumstoff. Aus Festigkeitsgründen können darin zusätzliche Elemente aus Metall, Kunststoff, Holz, und/oder Gewebe als Verstärkungsmaterial eingeformt sein.

Der obere Bereich des mit der sackartigen Folie umschlossenen Raumes weist vorzugsweise ein größeres Flüssigkeitsvolumen als der untere Bereich auf, weil der obere Bereich im Wesentlichen als Speicherbehälter dient. Dagegen wird der untere Bereich im Wesentlichen als Absorberfläche für Sonnenstrahlung genutzt. Er ist daher großflächig und mit einem Winkel zur Vertikalachse gestaltet. Insgesamt wird somit ein allgemein bekannter Speicher nach unten hin verlängert, wobei die Gestaltungsmöglichkeiten der Speicherform in relativ weiten Grenzen freigestellt sind.

Im oberen Bereich des mit der sackartigen Folie mindestens teilweise ausgefüllten Raumes, an der Innenseite mindestens eines umgebenden Teiles von Rahmen und/oder Formteilen der Wärmeisolierung, ist ein Wärmeübertrager angebracht oder eingeformt, welcher in direktem Kontakt mit der sackartigen Folie steht und wahlweise auch zur Verstärkung mindestens eines Formteiles dient. Der Wärmeübertrager wird vom zu erwärmenden Wasser durchströmt und muss daher druckbeständig ausgeführt sein.

In einer Ausführungsform ist der als Absorberfläche für Sonnenstrahlung bestimmte untere Bereich der sackartigen Folie von einem Absorber für Sonnenstrahlung abgedeckt und steht mit diesem in Kontakt. In einer weiteren alternativen Ausführungsform weist dagegen der als Absorberfläche für Sonnenstrahlung bestimmte untere Bereich der sackartigen Folie selbst Absorbereigenschaften an seiner Oberfläche auf. Weiterhin kann der als Absorberfläche für Sonnenstrahlung bestimmte untere Bereich der sackartigen Folie selbst eine transparente Oberfläche und im übrigen Teil Absorbereigenschaften, insbesondere eine dunkle Einfärbung, aufweisen, um die Flüssigkeit direkt zu erwärmen. Dann ist eine transparente Abdeckung nicht zwingend erforderlich und alle funktionsnotwendigen Eigenschaften wären in die Folie integriert.

Oberhalb der Absorberfläche sind ein Luftspalt sowie eine transparente Abdeckung vorgesehen, wobei die transparente Abdeckung mit ihren Außenkanten wahlweise im Rahmen und/oder in Formteilen der Wärmeisolierung fixiert ist.

Weiterhin ist im oberen Bereich des von Rahmen und/oder Formteilen der Wärmeisolierung begrenzten Raumes zur Aufnahme der sackartigen Folie ein belüfteter Druckausgleichsraum und/oder eine Druckausgleichsöffnung vorgesehen.

Die sackartige Folie kann auch nur in Teilbereichen vorhanden sein, so dass zusätzlich eine wasserundurchlässige Beschichtung der den Speicherbehälter begrenzenden Teile und Oberflächen vorgesehen ist. Diese Schutzbeschichtung kann beispielsweise schon bei der Herstellung der Kunststoffteile ausgebildet werden, beispielsweise mit einem Sprayverfahren, welches zum Herstellen von lang- und endlosfaserverstärkten Sandwichbauteilen dient.

Mit der erfindungsgemäßen Gestaltung wird ein einfach aufgebauter, gut handhabbarer Sonnenkollektor, insbesondere mit einem integrierten Warmwasserspeicher, geschaffen.

Einerseits entsteht ein kostengünstiger, fertigungsgerechter Aufbau und andererseits ergibt sich eine kompakte, optisch ansprechende Einheit, welche trotzdem ein großes Speichervolumen bietet. Es steht durch die Modulbauweise mit Formteilen ein leicht und flexibel transportierbares System zur solaren Warmwasserbereitung zur Verfügung.

Die Zeichnung stellt ein Ausführungsbeispiel der Erfindung dar. Es zeigt einen Sonnenkollektor mit einem integrierten Warmwasserspeicher:

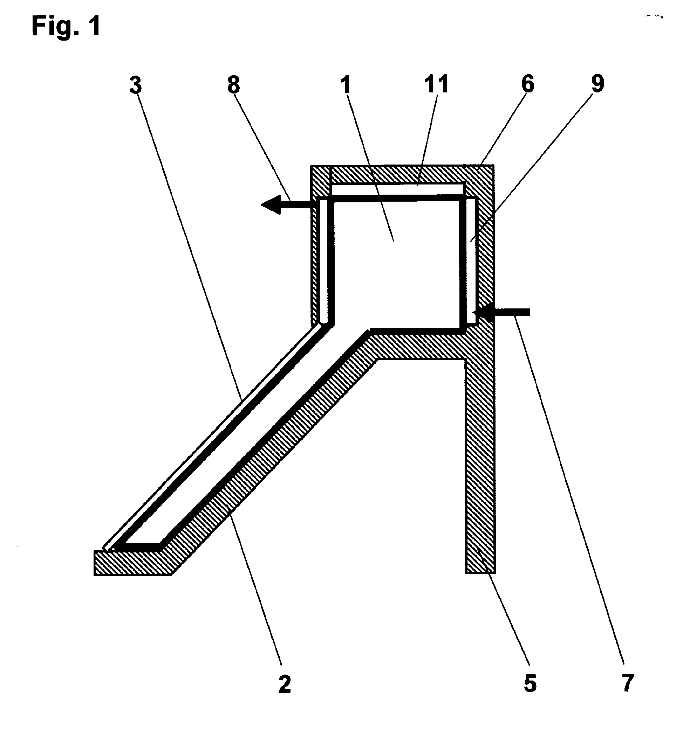

- Fig. 1:: im vertikalen Schnitt,
- Fig. 2:: in einer perspektivischen Ansicht und
- Fig. 3:: im horizontalen Schnitt durch den unteren Bereich.

Der Sonnenkollektor besitzt einem integrierten Warmwasserspeicher mit einem mit einer stagnierenden Flüssigkeit befüllbaren Speicherbehälter 1, welcher mit einer flüssigkeitsdichten, sackartigen Folie 2 ausgebildet ist. Diese ist in einen von transparenter Abdeckung 3, Absorber 4, Rahmen 5 und Formteilen 6 der Wärmeisolierung begrenzten Raum eingebracht. Der obere Bereich des mit der sackartigen Folie 2 ausgefüllten Raumes besitzt ein größeres Flüssigkeitsvolumen als der untere Bereich, welcher als Absorberfläche für Sonnenstrahlung dient und daher abgewinkelt zur Vertikalachse angebracht ist.

Ein mit einem Anschluss zur Kaltwassereinleitung 7 und einem Anschluss zur Warmwasserableitung 8 versehener Wärmeübertrager 9 ist im oberen Bereich, an der Innenseite mindestens eines Formteiles 6 der Wärmeisolierung angebracht oder eingeformt und steht in direktem Kontakt mit der sackartigen Folie 2.

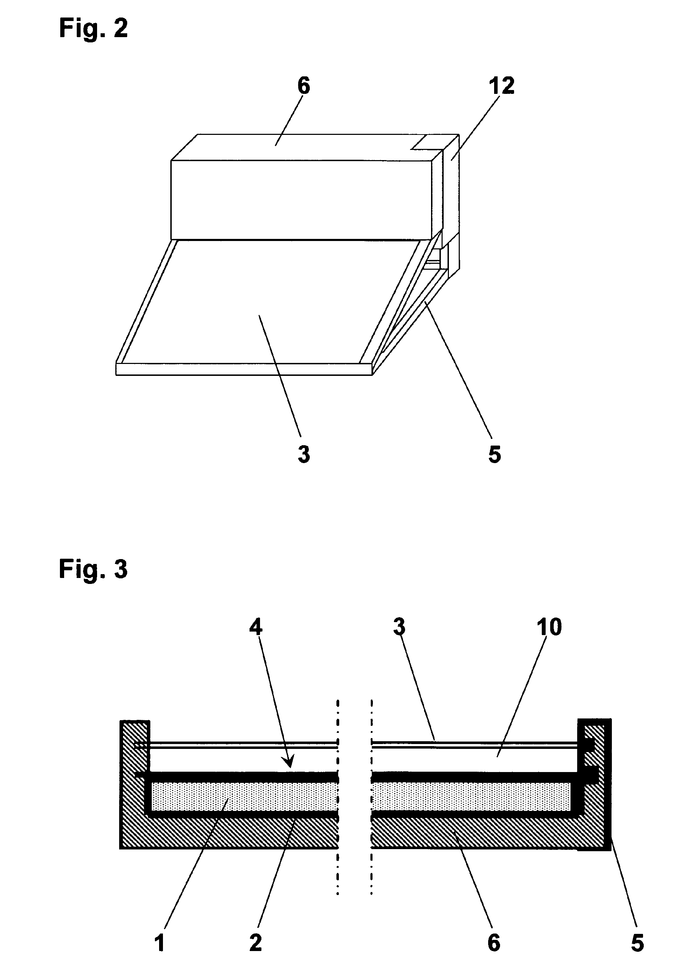

In Fig. 3 wird deutlich, dass der als Absorberfläche für Sonnenstrahlung bestimmte untere Bereich der sackartigen Folie 2 von einem Absorber 4 für Sonnenstrahlung abgedeckt ist und mit diesem in Kontakt steht. Oberhalb der Absorberfläche 4 sind ein Luftspalt 10 sowie die transparente Abdeckung 3 angeordnet, welche wahlweise im Rahmen 5 und/oder in Formteilen 6 der Wärmeisolierung fixiert ist.

Im oberen Bereich des Raumes zur Aufnahme der sackartigen Folie 2 ist ein belüfteter Druckausgleichsraum 11 vorgesehen. In Fig. 2 ist gezeigt, dass es auch möglich ist, Heizgeräte 12 und/oder andere erforderliche Komponenten des solaren Heizungs- und/oder Warmwasserbereitungssystems in die Gesamtanordnung, vorzugsweise in die Formteile 6 der Wärmeisolierung, zu integrieren.

## Patentansprüche

1. Sonnenkollektor, insbesondere mit einem integrierten Warmwasserspeicher, mit mindestens einem Speicherbehälter (1) mit einem Anschluss zur Kaltwassereinleitung (7) und einem Anschluss zur Warmwasserableitung (8) sowie einer Wärmeisolierung, **dadurch gekennzeichnet, dass** der Wasser führende Bereich des Sonnenkollektors und/oder der Speicherbehälter (1) mindestens in Teilbereichen mit einer flüssigkeitsdichten, sackartigen Folie (2) ausgebildet sind, welche in einen von transparenter Abdeckung (3), Absorber (4), Rahmen (5) und/oder Formteilen (6) der Wärmeisolierung begrenzten Raum eingebracht ist.

2. Sonnenkollektor nach Anspruch 1,
**dadurch gekennzeichnet, dass** die flüssigkeitsdichte, sackartige Folie (2) einen geschlossenen Raum bildet und mit einer stagnierenden Flüssigkeit, insbesondere mit Wasser, Wasser mit Korrosionsschutz, oder mit einem Medium mit einer großen Wärmekapazität befüllt wird.

3. Sonnenkollektor nach den Ansprüchen 1 oder 2,
**dadurch gekennzeichnet, dass** einzelne Formteile (6) vorwiegend aus Wärmedämmmaterial, insbesondere Schaumstoff, bestehen, in das aus Festigkeitsgründen zusätzliche Elemente aus Metall, Kunststoff, Holz, und/oder Gewebe als Verstärkungsmaterial eingeformt sind.

4. Sonnenkollektor nach einem der Ansprüche 1 bis 3,
**dadurch gekennzeichnet, dass** der obere Bereich des mit der sackartigen Folie (2) umschlossenen Raumes ein größeres Flüssigkeitsvolumen als der untere Bereich aufweist, dass der obere Bereich im Wesentlichen als Speicherbehälter (1) dient, dass der untere Bereich im Wesentlichen als Absorberfläche für Sonnenstrahlung dient sowie großflächig und mit einem Winkel zur Vertikalachse gestaltet ist.

5. Sonnenkollektor nach einem der Ansprüche 1 bis 4,
**dadurch gekennzeichnet, dass** im oberen Bereich des mit der sackartigen Folie (2) mindestens teilweise ausgefüllten Raumes, an der Innenseite mindestens eines umgebenden Teiles von Rahmen (5) und/oder Formteilen (6) der Wärmeisolierung, ein Wärmeübertrager (9) angebracht oder eingeformt ist, welcher in direktem Kontakt mit der sackartigen Folie (2) steht und wahlweise auch zur Verstärkung mindestens eines Formteiles (6) dient.

6. Sonnenkollektor nach einem der Ansprüche 1 bis 5,
**dadurch gekennzeichnet, dass** der als Absorberfläche für Sonnenstrahlung bestimmte untere Bereich der sackartigen Folie (2) von einem Absorber (4) für Sonnenstrahlung abgedeckt ist und mit diesem in Kontakt steht.

7. Sonnenkollektor nach einem der Ansprüche 1 bis 5,
**dadurch gekennzeichnet, dass** der als Absorberfläche für Sonnenstrahlung bestimmte untere Bereich der sackartigen Folie (2) selbst Absorbereigenschaften an seiner Oberfläche aufweist.

8. Sonnenkollektor nach einem der Ansprüche 1 bis 5,
**dadurch gekennzeichnet, dass** der als Absorberfläche für Sonnenstrahlung bestimmte untere Bereich der sackartigen Folie (2) eine transparente Oberfläche und im übrigen Teil Absorbereigenschaften, insbesondere eine dunkle Einfärbung, aufweist.

9. Sonnenkollektor nach einem der Ansprüche 1 bis 8,
**dadurch gekennzeichnet, dass** oberhalb der Absorberfläche ein Luftspalt (10) sowie eine transparente Abdeckung (3) vorgesehen sind, wobei die transparente Abdeckung (3) wahlweise im Rahmen (5) und/oder in Formteilen (6) der Wärmeisolierung fixiert ist.

10. Sonnenkollektor nach einem der Ansprüche 1 bis 9,
**dadurch gekennzeichnet, dass** im oberen Bereich des von Rahmen (5) und/oder Formteilen (6) der Wärmeisolierung begrenzten Raumes zur Aufnahme der sackartigen Folie (2) ein belüfteter Druckausgleichsraum (11) und/oder eine Druckausgleichsöffnung vorgesehen ist.

11. Sonnenkollektor nach einem der Ansprüche 1 bis 10,
**dadurch gekennzeichnet, dass** die sackartige Folie (2) nur in Teilbereichen vorhanden ist und dass zusätzlich eine wasserundurchlässige Beschichtung der den Speicherbehälter (1) begrenzenden Teile und Oberflächen vorgesehen ist.
